# DEMANDE DE BREVET EUROPEEN

(11) **EP 2 143 545 A1**
(43) Date de publication de la demande: **13.01.2010**
(21) Numéro de dépôt: 08159856.7
(22) Date de dépôt: 07.07.2008
(51) Int. Cl.: B29C 49/46, B65B 3/02, B65B 55/08, B65B 55/10, B29C 49/06, B29C 49/12

(54) **Procédé et dispositif de conditionnement d'un liquide alimentaire**

(71) Demandeur: Nestec S.A., 1800 Vevey (CH)
(72) Inventeur: Chauvin, Guillaume, 88410, MONTHUREUX SUR SAONE (FR); Chimetto, Fabio, 35016, PIAZZOLA SUL BRENTA (PD) (IT); Di Lucchio, Angelo, 88390, DOMEVRE SUR AVIERE (FR); Hartwig, Klaus, 54000, NANCY (FR)

(57) **Abrégé**

L'invention concerne un procédé et un dispositif de conditionnement d'un volume prédéterminé de liquide alimentaire dans un contenant en matériau thermoplastique constitué à partir d'une préforme positionnée dans un moule présentant une ouverture en regard d'une tête d'injection, caractérisé en ce que le procédé comprend une étape préalable d'exposition de la préforme à un fluide stérilisant apporté par un premier circuit connecté à la tête d'injection et une étape d'injection dans un évidement de la préforme d'au moins du liquide alimentaire apporté par un deuxième circuit connecté à la tête d'injection en sorte de favoriser une expansion de la préforme à l'intérieur du moule, le moule définissant une forme du contenant.

## Description

La présente invention concerne le domaine de la fabrication de contenants en matériau polymère, notamment en polyester. Plus particulièrement, elle concerne le domaine de la fabrication de bouteilles en polyester, de préférence en polyéthylène téréphtalate (PET) contenant un liquide, de préférence de l'eau et notamment de l'eau minérale.

Depuis de nombreuses années, les bouteilles en PET que l'on trouve habituellement dans le commerce sont fabriquées par soufflage ou soufflage-étirage, à l'air comprimé, de préformes en PET.

Une préforme se présente habituellement sous forme de tube cylindrique fermé à l'une de ses extrémités et ouvert à son extrémité opposée. La tête de la préforme, ouverte, correspond au col du contenant. Au cours du procédé classique de fabrication du contenant à partir d'une préforme, les préformes sont enfilées sur les plots cylindriques d'une chaîne de convoyage continue qui transporte ainsi les préformes à travers un four, essentiellement constitué par une section rectiligne bordée de chaque côté de moyens de chauffage par rayonnement, ce afin de conditionner en température la matière plastique pour l'étape de soufflage-étirage subséquente.

La préforme chaude est ensuite prélevée et transportée dans un moule d'une machine de soufflage. Le mouvement de transport réalisé par un bras de transfert par exemple, est coordonné avec celui de la machine de soufflage qui est généralement réalisée sous la forme d'un carrousel rotatif tournant de manière continue autour de son axe vertical et qui porte, à sa périphérie, une série de moules identiques. Ainsi, la préforme est placée dans le moule immédiatement après que celui-ci se soit ouvert et que le contenant précédemment formé soit retiré.

La préforme est préalablement chauffée de manière à être dans le moule à une température supérieure à la température de transition vitreuse (environ 100°C) afin de permettre la mise en forme par soufflage-étirage. La température de la préforme à la fin de l'étape de chauffage est légèrement supérieure à celle requise à l'intérieur du moule de la souffleuse, ce afin de tenir compte du refroidissement qui a lieu sur la distance existant entre le lieu de chauffage et le lieu du soufflage. Grâce à la présence simultanée de plusieurs moules, une telle machine de soufflage permet de produire des contenants à des cadences très élevées, de l'ordre de plusieurs dizaines de milliers d'unités à l'heure soit de l'ordre de 1000 à 2000 bouteilles par heure et par moule.

Le soufflage-étirage se fait par étirage à l'aide d'une tige métallique, une injection d'air se faisant à des pressions variant de 3 à 40 (3.10⁵ Pa à 4.10⁶ Pa). L'air est injecté à travers une buse dont l'extrémité est introduite à travers l'ouverture de la tête de la préforme.

Comme il est connu, la stérilisation des produits alimentaires et de leurs contenants est un sujet important, notamment en fonction des normes d'hygiène définies par les autorités sanitaires. Il apparaît que la mise en place de processus industriels efficaces permettant à faible coût le respect des normes, voire un bénéfice supplémentaire pour le consommateur en termes de conservation de longue durée des produits alimentaires est un défi actuel pour les industriels.

Dans ce contexte, l'invention permet de produire en grande quantité et à faible coût des bouteilles de liquide alimentaire dont la stérilité est élevée.

A cette fin, la demanderesse a mis au point un procédé de conditionnement d'un volume prédéterminé de liquide alimentaire dans un contenant en matériau thermoplastique constitué à partir d'une préforme qui peut être sensiblement cylindrique, la préforme étant éventuellement chauffée, et la préforme étant également positionnée dans un moule présentant une ouverture en regard d'une tête d'injection, le procédé comprenant une étape préalable d'exposition de la préforme à un fluide stérilisant apporté par un premier circuit connecté à la tête d'injection et une étape d'injection dans un évidement de la préforme d'au moins du liquide alimentaire apporté par un deuxième circuit connecté à la tête d'injection en sorte de favoriser une expansion de la préforme à l'intérieur du moule, le moule définissant une forme du contenant.

Le procédé selon l'invention permet une production efficace d'un volume de produit alimentaire conditionné de manière aseptique dans un unique dispositif intégré, le remplissage étant effectué dans une zone aseptique exceptionnellement petite.

Selon une caractéristique préférée l'étape d'exposition comprend une exposition à de la vapeur d'eau sous pression

Il est également possible que l'exposition comprenne une exposition à de l'acide peracétique.

Selon un mode de réalisation, l'exposition comprend une exposition à de l'eau oxygénée.

Préférentiellement, le procédé comprend de plus une étape d'irradiation de la préforme par des radiations stérilisantes.

Cette étape d'irradiation peut comprendre une irradiation de la préforme par des rayons X.

Alternativement ou éventuellement en combinaison, l'étape d'irradiation comprend une irradiation de la préforme par des micro-ondes

Il est également possible que l'étape d'irradiation comprenne une étape d'irradiation par un faisceau d'électrons ou de la lumière pulsée

Préférentiellement le procédé comprend de plus une étape préalable d'exposition de la tête de remplissage au fluide stérilisant.

Avantageusement il comprend aussi une étape préalable d'exposition au fluide stérilisant d'une canne d'élongation utilisée au cours de l'étape d'injection pour étirer la préforme longitudinalement.

Selon un mode de réalisation une étape préalable de stérilisation au moins partielle de la préforme est effectuée avant l'introduction de la préforme dans le moule.

Notamment, on procède par exemple à une première micro-bioréduction hors du moule, et à une deuxième micro-bioréduction dans le moule. Il s'agit dans les deux cas de réduire la population microbiologique d'environ 5 log.

Enfin, le procédé comprend avantageusement de plus une étape d'évacuation de débris du moule à l'issue d'une expansion d'une préforme.

Cette étape peut être complétée par un nettoyage du moule et de l'ensemble du dispositif notamment la tuyère. Les débris considérés peuvent être des petits volumes de liquide alimentaire ou des débris de matière thermoplastique. Cela permet de plus de soigner les propriétés d'hygiène des dispositifs utilisés.

Selon une caractéristique important de l'invention, le premier circuit et le deuxième circuit sont séparés et distincts.

Enfin, selon un aspect, ladite étape d'exposition de la préforme à un fluide stérilisant inclut une augmentation de la température de la préforme. Il est même avantageux que ladite augmentation de la température de la préforme soit suffisante pour favoriser l'expansion de la préforme à l'intérieur du moule au cours de l'étape d'injection.

L'invention de la demanderesse concerne également un dispositif de conditionnement d'un volume prédéterminé de liquide alimentaire dans un contenant en matériau thermoplastique constitué à partir d'une préforme qui peut être sensiblement cylindrique, la préforme étant éventuellement chauffée, et la préforme étant également positionnée dans un moule présentant une ouverture en regard d'une tête d'injection, le dispositif comprenant des moyens pour effectuer une exposition préalable de la préforme à un fluide stérilisant apporté par un premier circuit connecté à la tête d'injection et des moyens d'injection dans un évidement de la préforme d'au moins du liquide alimentaire apporté par un deuxième circuit connecté à la tête d'injection en sorte de favoriser une expansion de la préforme à l'intérieur du moule, le moule définissant une forme du contenant.

Ce dispositif peut avantageusement comporter des moyens adaptés à mettre en oeuvre respectivement les étapes de procédé visées ci-dessus, prise séparément ou en combinaison.

L'invention va maintenant être décrite en détails, en référence aux figures annexées, relatives à des modes de réalisation donnés à titre d'exemple.
La figure 1 présente un schéma fonctionnel d'un dispositif de conditionnement de liquide alimentaire auquel s'applique l'invention.
La figure 2 présente un aspect d'un dispositif de conditionnement de liquide alimentaire fonctionnant selon l'invention.
La figure 3 présente un deuxième aspect d'un dispositif de conditionnement de liquide alimentaire fonctionnant selon l'invention.

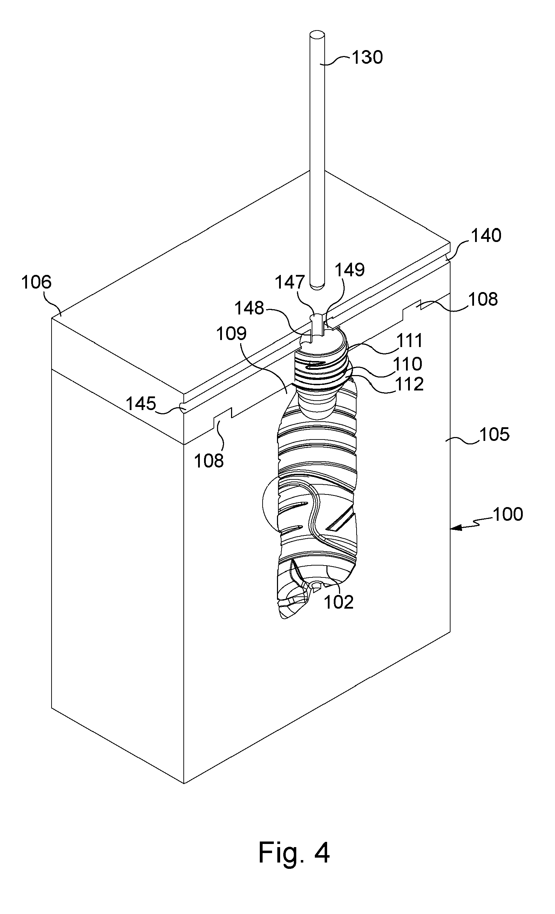

La figure 4 illustre un mode de réalisation alternatif de l'invention.

Le mode de réalisation donné ici à titre d'exemple se rapporte à un procédé de fabrication de bouteilles d'eau minérale en PET à partir d'une préforme chauffée. La préforme se présente sous la forme d'un tube cylindrique fermé à son extrémité inférieure. La tête de la préforme ouverte correspond au col de la bouteille, qui est un goulot sur lequel on visse une capsule de fermeture.

Le dispositif comprend un premier circuit pour le liquide à embouteiller et un deuxième circuit pour un fluide chauffé pressurisé apte à stériliser la tête de remplissage.

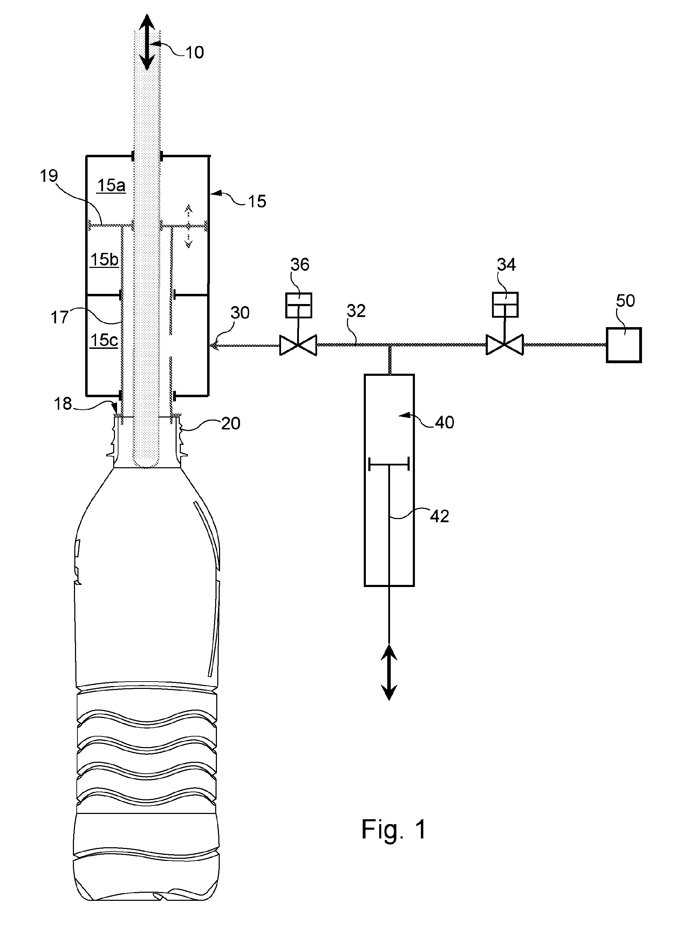

En référence à la figure 1, une canne d'étirage 10 est insérée dans un vérin 15 à air comprimé. La canne d'étirage 10 est généralement commandée par un vérin pneumatique associé à une came qui lui donne un mouvement longitudinal (représenté par une flèche). Il est également possible d'utiliser un moteur d'étirage.

Le vérin 15 à air comprimé comprend un cylindre 17 commandant une tête d'injection 18, que traverse la canne d'étirage 10. La tête d'injection 18 est reliée au col 20 d'une préforme de PET, placée dans un moule (non représenté) et qui après expansion prend la forme d'une bouteille d'eau minérale, cette forme étant déterminée par la paroi du moule.

Le vérin comprend trois chambres, les deux chambres supérieures 15a et 15b étant remplies d'air comprimé. Entre ces deux chambres supérieures, une paroi de piston 19 coulisse dans une direction parallèle à la canne d'étirage (déplacement représenté par une flèche). Cette paroi 19 est traversée en son centre par la canne d'étirage 10.

Le vérin à air comprimé comprend également une entrée latérale 30 de liquide alimentaire, ici de l'eau minérale reliée à la troisième chambre 15c du vérin, qui est la chambre inférieure. Le liquide est amené par une canalisation 32.

Une arrivée externe d'eau minérale amène le liquide via l'extrémité distante de cette canalisation 32 à une première soupape 34 qui est reliée à l'ouverture d'un cylindre de remplissage 40 à chambre unique comprenant un piston 42 commandé par un moteur de remplissage (mouvement représenté par une flèche). Ce moteur donne au piston un mouvement longitudinal dans la chambre unique du cylindre de remplissage 40.

En série derrière la première soupape 34 et l'ouverture du cylindre de remplissage 40, sur la canalisation 32, se trouve une deuxième soupape 36. La canalisation 32 débouche ensuite dans la chambre inférieure 15c du vérin à air comprimé 15.

La chambre inférieure 15c du vérin à air comprimé est traversée par le cylindre de commande 17 de la tête de remplissage 18, dont le volume interne débouche à travers la sortie inférieure du vérin à air comprimé 15 dans la tête de remplissage 18. Le cylindre de commande comprend une ouverture latérale permettant la circulation du liquide alimentaire entre la chambre inférieure du vérin et l'intérieur du cylindre de commande.

La canne d'étirage 10 traverse quant à elle le cylindre de commande 17 jusqu'à la tête de remplissage 18 et le goulot 20 de la préforme de bouteille.

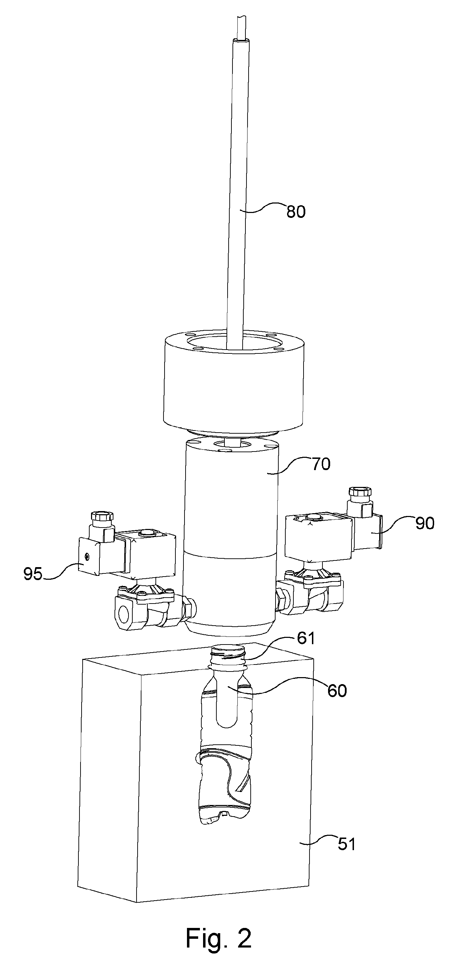

En référence à la figure 2 un demi-moule 51 dont la paroi interne définit une forme de bouteille d'eau minérale est représenté. Une préforme 60 en PET possédant un col 61 définissant un goulot dont l'extérieur présente un filetage pour la pose d'une capsule de fermeture est positionnée dans la partie haute du moule, qui est débouchant sur l'extérieur de celui-ci. L'ouverture de la préforme est dirigée vers l'extérieur du moule, et son axe est superposé avec celui de la cavité du demi-moule.

En phase d'utilisation, un deuxième demi-moule complète le premier demi-moule, en sorte de former un moule complet dont la cavité centrale peut posséder globalement une symétrie de révolution, ou avoir une autre forme, en fonction de la géométrie souhaitée pour le contenant.

Au dessus du moule se trouve une tuyère de remplissage 70 globalement cylindrique, d'axe positionné dans le prolongement de l'axe de la cavité du moule et comportant un vérin traversé en son centre par une canne d'étirage 80 positionnée également dans le prolongement de l'axe de la préforme et du moule.

De part et d'autre du vérin central se trouvent deux tuyères 90 et 95 permettant d'amener des fluides liquides ou gazeux dans le vérin au-dessus du goulot de la préforme 61 positionné dans l'ouverture supérieure du moule 51.

La tuyère de gauche 95 est destinée à l'apport du liquide alimentaire, ici de l'eau minérale.

La tuyère de droite 90 est destinée à l'apport du fluide de stérilisation, qui est dans le premier mode de réalisation considéré, de la vapeur d'eau.

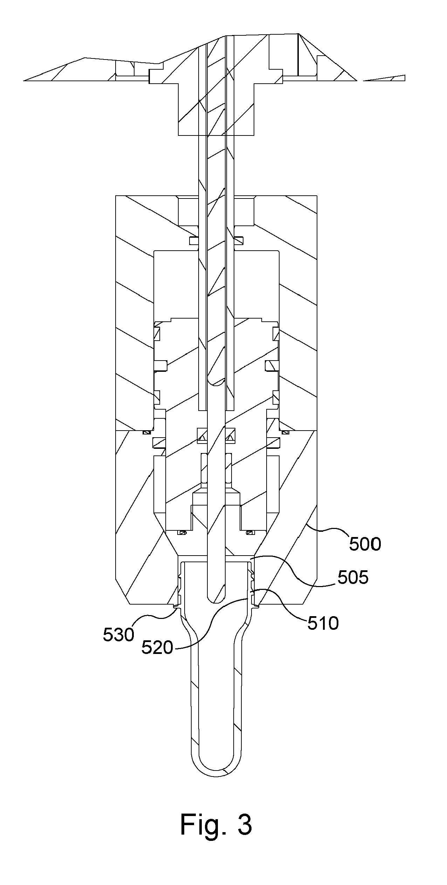

La figure 3 représente un embout de tuyère en forme de cloche 500 utilisé dans le cadre de l'invention selon un mode de réalisation préféré.

Les pressions interne et externe de part et d'autre de la circonférence du col de la préforme (c'est-à-dire sur les surfaces externes 510 du col, et sur les surfaces internes 520 du col) sont identiques, du fait de la présence d'un passage 505 reliant les volumes de part et d'autre de la circonférence, à l'intérieur de la tuyère. L'étanchéité du remplissage se fait à l'aide de la collerette 530 de la préforme. Grâce à ce dispositif, il n'y a pas de risque de déformation du col de la préforme au cours de l'injection d'un fluide sous pression par la tuyère.

Selon un autre mode de réalisation, un embout de tuyère maintient les surfaces externes 510 du col de la préforme de telle sorte que quand un fluide sous pression est injectée par le haut de la tuyère vers l'intérieur de l'évidement de la préforme, la pression exercée sur les parois internes 520 du col de la préforme par le fluide est compensée par le maintien apporté par les parois de l'embout de tuyère en forme de cloche. Le col de la préforme ne se déforme alors pas, malgré la pression élevée.

Sur la figure 2, un demi-moule 100 est représenté, une préforme 110 de PET étant positionnée dans la partie haute de la cavité du demi-moule qui a une forme générale cylindrique, avec un fond 102 en partie basse. Un deuxième demi-moule non représenté permet de compléter le moule et d'immobiliser la préforme dans la cavité fermée formée par les cavités des deux demi-moules, la cavité fermée définissant une forme de bouteille de liquide alimentaire.

On note que le demi-moule 100 comprend une partie basse 105 et une partie haute 106, la partie haute 106 étant fixée sur la partie basse via deux rails 108 formant protubérances sur la face supérieure de la partie haute 106, les deux rails étant parallèles l'un à l'autre, de part et d'autre de la cavité du moule, perpendiculairement au plan de coupe. La cavité du moule est principalement contenue dans la partie basse du moule.

La préforme 110 comporte un goulot 111 déjà formé présentant un pas de vis externe pour recevoir un bouchon. Le goulot 111 est positionné dans un rétrécissement 109 de la cavité du demi-moule, adapté à l'immobiliser, tout en étant complémentaire de la forme de la bouteille finale. On note que ce rétrécissement 109 est juste en dessous de la face supérieure de la partie basse du moule, et que le goulot est ainsi en contact à la fois avec la partie haute 106 du moule et avec sa partie basse 105. Le pas de vis du goulot est en contact avec la paroi d'une cavité globalement cylindrique de la partie haute 106 du moule. Le goulot possède de plus une collerette 112 qui est positionnée exactement à l'interface entre la partie haute 106 et la partie basse 105 du moule.

Dans le prolongement du goulot, dans la direction du fond 102 de la cavité, la préforme comporte un évidement (masqué sur la figure), celui-ci se terminant par un fond.

La surface interne de la cavité du moule est structurée de manière à définir la structure externe d'une bouteille de liquide alimentaire, ici une bouteille d'eau minérale. Cette structure comporte des rainures circulaires, dont certaines ont un rôle structurel ou fonctionnel comme par exemple permettre la préhension par un utilisateur ou permettre une flexibilité lors de l'utilisation ou en vue de l'élimination de la bouteille après usage.

Le moule comporte dans sa partie haute deux canalisations 140 et 145 rectilignes de section circulaire dans le prolongement l'une de l'autre, perpendiculaires à l'axe de la cavité du moule, correspondant à l'axe de la bouteille une fois formée. Les deux canalisations sont disposées de part et d'autre du haut du goulot de la préforme, et sont débouchantes au-dessus de celui-ci de telle sorte qu'un liquide injecté dans l'une ou l'autre de ces canalisations débouche dans le goulot de la préforme. On note que les deux canalisations sont dans le plan de coupe du moule, et qu'elles sont donc formées par la réunion du demi-moule représenté et du demi-moule complémentaire.

Une canne d'étirage 130 est positionnée en partie haute de la figure, dans le prolongement de l'axe de la préforme et de l'axe de l'évidement du moule. Une ouverture cylindrique 147 dans la partie haute du moule et d'axe aligné à l'axe de la préforme permet l'introduction de la canne d'étirage 130 dans le moule et dans l'évidement de la préforme, jusqu'à ce que l'extrémité de la canne entre en contact avec le fond de l'évidement pour provoquer l'étirage de la préforme.

On note qu'au dessus du goulot, le moule présente deux becs 148 et 149 à la sortie des conduites 145 et 140, permettant d'orienter le fluide injecté respectivement par les conduites 145 et 140 vers l'intérieur de la préforme à travers son goulot, faisant ainsi suivre un virage à 90° au fluide. Les deux becs 148 et 149 séparent également l'intérieur des conduites de l'intérieur de l'ouverture cylindrique 147.

Dans ce deuxième mode de réalisation, le fluide de stérilisation considéré est de l'eau oxygénée H2O2 (peroxyde d'hydrogène). Il pourrait s'agir d'un autre peroxyde.

Une canne d'étirage 130 est positionnée en partie haute de la figure, dans le prolongement de l'axe de la préforme et de l'axe de l'évidement du moule. Une ouverture cylindrique dans la partie haute du moule permet l'introduction de la canne d'étirage 130 dans le moule et dans l'évidement de la préforme, jusqu'à ce que l'extrémité de la canne entre en contact avec le fond de l'évidement pour provoquer l'étirage de la préforme.

Dans un troisième mode de réalisation (non représenté), le fluide de stérilisation considéré est de l'acide peracétique CH3CO3H.

Bien entendu l'invention n'est pas limitée aux modes de réalisation décrits et représentés par les dessins annexés et s'étend à toutes les variantes envisageables par l'homme du métier dans le cadre des revendications.

## Revendications

1. Procédé de conditionnement d'un volume prédéterminé de liquide alimentaire dans un contenant en matériau thermoplastique constitué à partir d'une préforme positionnée dans un moule présentant une ouverture en regard d'une tête d'injection, **caractérisé en ce que** le procédé comprend une étape préalable d'exposition de la préforme à un fluide stérilisant apporté par un premier circuit connecté à la tête d'injection et une étape d'injection dans un évidement de la préforme d'au moins du liquide alimentaire apporté par un deuxième circuit connecté à la tête d'injection en sorte de favoriser une expansion de la préforme à l'intérieur du moule, le moule définissant une forme du contenant.

2. Procédé selon la revendication 1 **caractérisé en ce que** l'étape d'exposition comprend une exposition à de la vapeur d'eau sous pression.

3. Procédé selon la revendication 1 ou la revendication 2 **caractérisé en ce que** l'exposition comprend une exposition à de l'acide peracétique.

4. Procédé selon l'une des revendications 1 à 3 **caractérisé en ce que** l'exposition comprend une exposition à de l'eau oxygénée.

5. Procédé selon l'une des revendications 1 à 4 **caractérisé en ce que** l'exposition comprend une exposition à du produit alimentaire préalablement chauffé.

6. Procédé selon l'une des revendications 1 à 5 **caractérisé en ce qu'**il comprend de plus une étape d'irradiation de la préforme par des radiations stérilisantes.

7. Procédé selon la revendication 6 **caractérisé en ce que** l'étape d'irradiation comprend une irradiation de la préforme par des rayons X.

8. Procédé selon la revendication 6 ou la revendication 7 **caractérisé en ce que** l'étape d'irradiation comprend une irradiation de la préforme par des micro-ondes.

9. Procédé selon l'une des revendications 6 à 8 **caractérisé en ce que** l'étape d'irradiation comprend une étape d'irradiation par un faisceau d'électrons ou de la lumière pulsée.

10. Procédé selon l'une des revendications 1 à 9 **caractérisé en ce qu'**il comprend de plus une étape préalable d'exposition de la tête de remplissage au fluide stérilisant.

11. Procédé selon l'une des revendications 1 à 10 **caractérisé en ce qu'**il comprend de plus une étape préalable d'exposition au fluide stérilisant d'une canne d'élongation utilisée au cours de l'étape d'injection pour étirer la préforme longitudinalement.

12. Procédé selon l'une des revendications 1 à 11 **caractérisé en ce qu'**une étape préalable de stérilisation au moins partielle de la préforme est effectuée avant l'introduction de la préforme dans le moule.

13. Procédé selon l'une des revendications 1 à 12 **caractérisé en ce qu'**il comprend de plus une étape d'évacuation de débris du moule à l'issue d'une expansion d'une préforme.

14. Procédé selon l'une des revendications 1 à 13, **caractérisé en ce que** le premier circuit et le deuxième circuit sont séparés et distincts.

15. Procédé selon l'une des revendications 1 à 14, **caractérisé en ce que** ladite étape d'exposition de la préforme à un fluide stérilisant inclut une augmentation de la température de la préforme.

16. Procédé selon l'une des revendications 1 à 15, **caractérisé en ce que** ladite augmentation de la température de la préforme est suffisante pour favoriser l'expansion de la préforme à l'intérieur du moule au cours de l'étape d'injection.

17. Dispositif de conditionnement d'un volume prédéterminé de liquide alimentaire dans un contenant en matériau thermoplastique constitué à partir d'une préforme positionnée dans un moule présentant une ouverture en regard d'une tête d'injection, **caractérisé en ce que** le dispositif comprend des moyens pour effectuer une exposition préalable de la préforme à un fluide stérilisant apporté par un premier circuit connecté à la tête d'injection et des moyens d'injection dans un évidement de la préforme d'au moins du liquide alimentaire apporté par un deuxième circuit connecté à la tête d'injection en sorte de favoriser une expansion de la préforme à l'intérieur du moule, le moule définissant une forme du contenant.
